## Europäisches Patentamt
## European Patent Office
## Office européen des brevets

(11) Veröffentlichungsnummer: **0 049 492**

**A1**

(12) **EUROPÄISCHE PATENTANMELDUNG**

(21) Anmeldenummer: **81107833.6**

(22) Anmeldetag: **02.10.81**

(51) Int. Cl.³: **F 24 J 3/02**

(30) Priorität: **07.10.80 DE 3037848**

(43) Veröffentlichungstag der Anmeldung:
**14.04.82 Patentblatt 82/15**

(84) Benannte Vertragsstaaten:
**AT BE CH DE FR GB IT LI LU NL SE**

(71) Anmelder: **Wilhelm Reisgies KG**
**Schlebuscher Strasse 71**
**D-5090 Leverkusen 3(DE)**

(72) Erfinder: **Wegner, Günther**
**Bayerstrasse 37**
**D-5303 Bornheim-Hersel(DE)**

(74) Vertreter: **Gille, Christian, Dipl.-Ing. et al,**
**Redies , Redies, Türk & Gille Bruckner Strasse 20**
**D-4000 Düsseldorf 13(DE)**

(54) **Wärmetauscher für die Gewinnung von Wärme aus Umluft.**

(57) Ein Wärmetauscher zum Gewinnen von Wärme aus Umluft ist frei aufstellbar ausgebildet und weist an wenigstens einem Ständer (22) im gegenseitigen Abstand voneinander mehrere in Serie geschaltet untereinander verbundene, als Hohlkörper ausgebildete Wärmetauschelemente (26) auf. Jedes Wärmetauschelement ist vorzugsweise als Hohlkugel ausgebildet, die oben und unten je eine ggfs. zu verschließende Öffnung (32) für den Durchstrom von Luft enthält.

FIG. 3

EP 0 049 492 A1

G 52 971

Herr Günther Wegner,
Bayerstr. 37, 5303 Bornheim-Hersel

Wärmetauscher für die Gewinnung von Wärme aus Umluft

Die Erfindung betrifft einen für die Gewinnung von Wärme aus Umluft bestimmten Wärmetauscher.

Zum Gewinnen von Nutzwärme aus Sonnenenergie ist es bekannt, auf Gebäuden sogenannte Sonnenkollektoren anzubringen, die im allgemeinen aus auf dem Dach zu befestigenden großflächigen plattenförmigen Elementen bestehen. Weiterin ist es zum Gewinnen von Nutzwärme aus Außenluft bekannt, einen sogenannten "Energie-Stapel" als Wärmetauscher zu verwenden, d.h. einen Wärmetauscher für eine Wärmepumpenheizung, der aus einer Mehrzahl von übereinander angeordneten plattenförmigen Wärmetauschelementen besteht, zwischen denen Wind hindurchstreichen soll. Ein derartiger Wärmetauscher ist verhältnismäßig sperrig und hat ein unschönes Aussehen. Gleichwohl ist der Durchstrom von windbewegter Außenluft zwischen den einzelnen plattenförmigen Wärmtauschelementen nur unvollkommen gewährleistet, weil diese Elemente verhältnismäßig dicht aneinander liegen und keine Vorkehrungen getroffen sind, um den Luftstrom in einer den zweckmäßigsten Wärmeübergang gewährleistenden Weise zu leiten.

Außerdem dürfen sowohl die bekannten Sonnenkollektoren als auch die als "Energie-Stapel" bezeichneten Wärmetauscher für Wärmepumpenheizungen aufgrund baubehördlicher Bestimmungen nicht überall auf Gebäuden und auch nicht auf allen Gebäuden angebracht werden.

Der Erfindung liegt die Aufgabe zugrunde, einen Wärmetauscher zum Gewinnen von Wärme aus Umluft zu schaffen, der unabhängig von einem Gebäude aufzustellen ist, ein ansprechendes Äußeres aufweist und mit verbessertem Wirkungsgrad arbeitet.

Diese Aufgabe wird erfindungsgemäß dadurch gelöst, daß der Wärmetauscher frei aufstellbar ausgebildet ist und an wenigstens einem Ständer eine Mehrzahl von im gegenseitigen Abstand voneinander angeordnete, in Serie geschaltet untereinander verbundene, als Hohlkörper ausgebildete Wärmetauschelemente aufweist. Beim erfindungsgemäßen Wärmetauscher werden die einzelnen Wärmetauschelemente also derart von der die Wärme abgebenden Luft überstrichen, daß sich zwischen diesen kein Luftstau bildet und die abgekühlte Luft dem Wärmetauscher keine Wärme mehr entziehen kann, gleichgültig in welcher Richtung er angeströmt wird. Die freie Aufstellbarkeit des Wärmetauschers ermöglicht, ihn unabhängig von dem mit seiner Hilfe zu beheizenden Gebäude anzuordnen, beispielsweise in einem Garten, auf einem Vorplatz oder an sonst geeigneter Stelle, um einerseits die gewünschte Luftströmung über seine Wärmetauschelemente zu gewährleisten und andererseits die Aufstellung an einem Ort vornehmen zu können, an dem aus ästhetischen oder sonstigen Gründen keine Beschränkungen für die Aufstellbarkeit gegeben sind. Dabei ist man in der Gestaltung des Wärmetauschers und insbesondere der Anordnung der einzelnen Wärmetauschelemente wenigen Beschränkungen unterworfen, so daß man ihm auch die Gestalt einer plastischen Skulptur geben kann.

Sind die einzelnen Wärmetauschelemente des Wärmetauschers an einem oder mehreren Ständern senkrecht übereinander angeordnet, so daß mehrere Wärmetauschelemente jeweils eine Säule oder dergleichen bilden, über und durch die die bewegte Luft hindurchstreichen kann, steigt die Luft, nachdem sie durch ein Wärmetauschelement hindurchgestrichen ist und ihr die entnehmbare Wärme entzogen wurde, an dem zentralen Ständer hoch, ohne erneut über die Oberfläche eines weiteren Wärmetauschelementes strömen zu müssen, so daß sie den weiteren Wärmetauschelementen nicht wieder Wärme entziehen kann.

Gemäß einer praktischen speziellen Ausführungsform der Erfindung ist jedes Wärmetauschelement als Hohlkugel ausgebildet, welche oben und unten je eine Öffnung für den Durchstrom von Luft enthält. Derartige Wärmetauschelemente haben den Vorteil, daß sie in jeder Richtung in gleicher Weise von bewegter Luft angeströmt werden und auf die darüber und darunter angeordneten anderen Wärmetauschelemente praktisch keinen Windschatten werfen. Diese Hohlkugeln lassen sich zu ästhetisch ansprechenden Skulpturen zusammensetzen, welche deren technischen Zweck nicht ohne weiteres erkennen lassen.

Die Hohlkugeln sind zweckmäßig auf Rohren abgestützt, die zum Zuführen und Ableiten des Wärmeträgermediums dienen, so daß sich ein gesonderter Ständer erübrigt.

Jedes Wärmetauschelement besteht beispielsweise aus einem konturierten, plattenförmigen Körper, der eine strömungsmitteldichte Außenhaut aufweist und im Inneren Öffnungen für den Durchstrom und die Verteilung eines Wärmeträgermediums wie einer Flüssigkeit enthält und mit einem Einlaß und einem Auslaß für das Wärmeträger-

4

0049492

medium versehen ist. Die Wärmetauschelemente sind daher als dünne Körper ausgebildet, die optimal für den Wärmeübergang geeignet sind, weil das Wärmeträgermedium in verhältnismäßig dünner Schicht durch die einzelnen Wärmetauschelemente strömt und dementsprechend eine verhältnismäßig große Oberfläche für den Wärmeübergang bietet.

Wenn die Wärmetauschelemente als Kollektor arbeiten sollen, ist nach einem weiteren Merkmal der Erfindung die Außenhaut jedes Wärmetauschelementes transparent und die Innenhaut optisch schwarz, so daß Sonnenstrahlen in das Innere der Wand des Wärmetauschelementes eindringen können, nicht jedoch bis in seinen Hohlraum gelangen. In diesem Falle ist der Hohlkörper vollständig geschlossen, so daß kein Luftstrom durch ihn hindurchgehen kann, der von der erwärmten Innenhaut Wärme abführen könnte.

In der Zeichnung ist ein Ausführungsbeispiel des erfindungsgemäßen Wärmetauschers schematisch dargestellt, und zwar zeigt

Fig. 1 eine Ansicht des Wärmetauschers mit in mehreren Reihen übereinander angeordneten Wärmetauschelementen in Form von Hohlkugeln,

Fig. 2 eine Draufsicht auf den Wärmetauscher aus Fig. 1,

Fig. 3 einen senkrechten Schnitt durch zwei übereinander angeordnete Wärmetauschelemente in Form von Hohlkugeln, die an der Zufuhr und Abfuhr des Wärmeträgermediums dienenden Rohren angebracht sind, und

Fig. 4 einen horizontalen Schnitt nach Linie IV - IV aus Fig. 3.

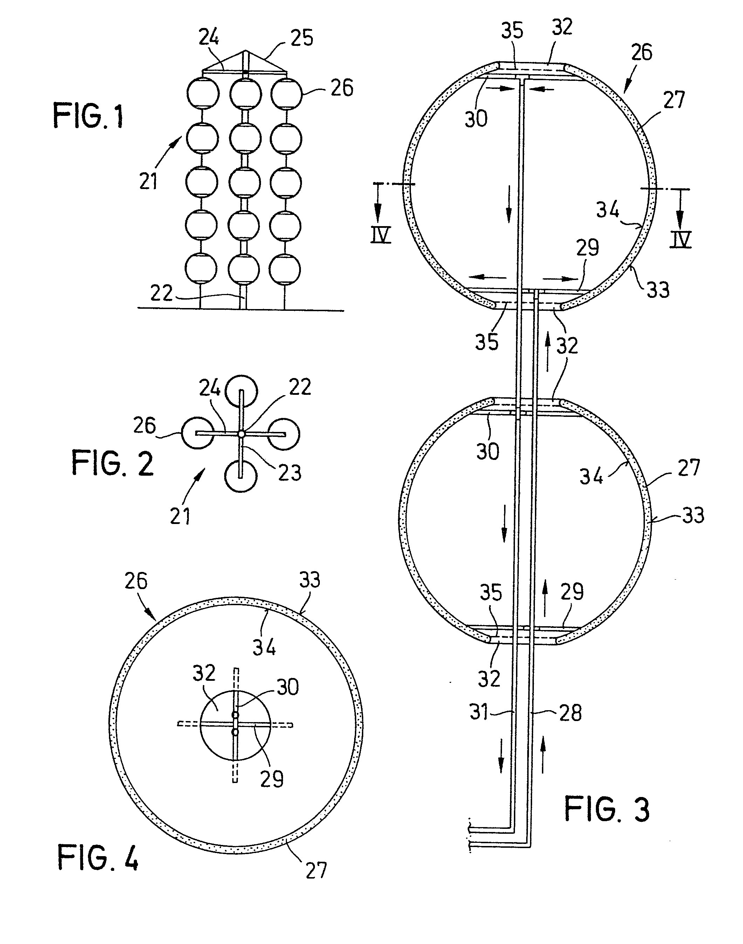

Der in Fig. 1 und 2 gezeigte Wärmetauscher 21 hat eine zentrale Säule 22, an deren oberen Ende zwei horizontale Arme 23 und 24 einander überkreuzend befestigt sind, über die Drähte 25 geführt sind, auf denen Hohlkugeln 26 der in Fig. 3 und 4 dargestellten Art befestigt sind. Es ist erkennbar, daß der Wärmetauscher 21 Wärmetauschelemente in Form von Hohlkugeln 26 in vier senkrechten Reihen aufweist. Diese Hohlkugeln können aber auch in anderer beliebiger Anordnung vorgesehen sein und somit Skulpturen der verschiedensten Formen bilden.

Aus Fig. 3 und 4 sind Einzelheiten der die Wärmetauschelemente bildenden Hohlkugeln 26 zu erkennen. Die Hohlkugeln 26 sind dünnwandig mit strömungsmitteldichter Außenhaut ausgeführt und enthalten imInneren ihrer Wand 27 in der Zeichnung nur angedeutete Öffnungen, so daß ein Wärmeträgermedium wie ein Flüssigkeit durch ihre Wandung gleichmäßig verteilt hindurchströmen kann. Dieses Wärmeträgermedium wird durch eine Rohrleitung 28 herangeführt und gelangt über Stichleitungen 29 im unteren Bereich jeder Hohlkugel 26 in das Innere von deren Wand 27. Im oberen Bereich jeder Hohlkugel 26 befindet sich ebenfalls eine Stichleitung 30, welche zum Rückführen des Wärmeträgermediums dient, nachdem dasselbe durch die Wand 27 der betreffenden Hohlkugel 26 hindurchgeströmt ist. Die Stichleitungen 30 münden in einer Rohrleitung 31, durch welche das erwärmte Wärmeträgermedium einer Verbrauchsstelle zugeführt wird.

0049492

Wie Fig. 4 zeigt, sind die Stichleitungen 29 und 30 um 90° gegeneinander versetzt angeordnet. Sie dienen bei dieser Ausführungsform auch zur Aufhängung der Hohlkugeln 26 an den Rohrleitungen 28 und 31, so daß ein besonderer Ständer oder eine besondere Haltevorrichtung anderer Art nicht notwendig ist.

Jede der Hohlkugeln 26 ist oben und unten mit je einer zentralen Öffnung 32 versehen, welche groß genug ist, um einen ungestörten Durchstrom von Luft um die Rohrleitungen 28 und 31 oder einen Ständer herum zu ermöglichen. Somit kann Luft, der Wärme entzogen werden soll, sowohl über die Außenseite als auch die Innenseite der Wand 27 jeder Hohlkugel 26 strömen.

Wenn die Hohlkugeln 26 als Sonnenkollektoren arbeiten sollen, ist die Außenhaut 33 ihrer Wand transparent und die Innenhaut 34 optisch schwarz, so daß die Sonnenstrahlen in die Wand 27 eindringen, nicht aber durch sie hindurchgehen können. In diesem Falle sind die Öffnungen 32 durch einen Deckel 35 verschlossen, der in Fig. 3 gestrichelt angedeutet ist. Somit findet kein Luftstrom durch die Hohlkugeln 26 statt. Vielmehr wird die in der Wand 27 gesammelte Wärme allein vom durch die Wand strömenden Wärmetragermedium abgeführt und einer Nutzstelle zugeführt.

Die als Wärmetauschelemente dienenden Hohlkugeln 26 können in beliebiger Anzahl und räumlicher Anordnung vorgesehen werden, um einen Wärmetauscher der jeweils gewünschten Kapazität zu schaffen, der auch eine ästhetisch ansprechende Form hat und somit wie eine künstlerische Skulptur aussieht, ohne daß seine technische Funktion ohne weiteres erkennbar ist.

Obwohl die Kugelform die wohl günstigste Gestalt für die Wärmetauschelemente ist, sind auch andere Hohlkörperformen geeignet, beispielsweise Hohlzylinder, Hohlkegel und dergleichen.

G/uh

EPA- u. PCT-SATZSPIEGEL-PAPIER
HERMANN ARZT GMBH, MÜNCHEN, TEL. (0:9) 4480431

1 G 52 971

Patentansprüche:

1. Wärmetauscher zum Gewinnen von Wärme aus Umluft,
   d a d u r c h   g e k e n n z e i c h n e t,
   daß er frei aufstellbar ausgebildet ist und an
   wenigstens einem Ständer (22; 25) im gegenseitigen
   Abstand voneinander mehrere in Serie geschaltet
   untereinander verbundene, als Hohlkörper ausgebildete
   Wärmetauschelemente (26) aufweist.

2. Wärmetauscher nach Anspruch 1, dadurch gekennzeichnet, daß die Wärmetauschelemente (26) an
   einem oder mehreren Ständern (22; 25) senkrecht
   übereinander angeordnet sind.

3. Wärmetauscher nach Anspruch 1 oder 2, dadurch
   gekennzeichnet, daß jedes Wärmetauschelement als
   Hohlkugel (26) ausgebildet ist und oben und unten
   je eine Öffnung (32) für den Durchstrom von Luft
   enthält.

4. Wärmetauscher nach Anspruch 3, dadurch gekennzeichnet, daß die Hohlkugel (26) auf Rohren
   (28, 31) abgestützt sind, die zum Zuführen und
   Ableiten des Wärmeträgermediums dienen.

5. Wärmetauscher nach einem der Ansprüche 1 bis 4, dadurch gekennzeichnet, daß jedes Wärmetauschelement (26) aus einem konturierten, plattenförmigen Körper (27) besteht, der eine strömungsmitteldichte Außenhaut aufweist und im Inneren Öffnungen für den Durchstrom und die Verteilung eines Wärmeträgermediums wie einer Flüssigkeit enthält und mit wenigstens einem Einlaß (29) und wenigstens einem Auslaß (30) für das Wärmeträger-medium versehen ist.

6. Wärmetauscher nach einem der Ansprüche 1 bis 5, dadurch gekennzeichnet, daß die Außenhaut (33) der Wand (27) jedes Wärmetauschelementes (26) transparent und die Innehaut (34) optisch schwarz ist und daß der Hohlkörper vollständig geschlossen aus-gebildet ist.

G/uh

EPA- u. PCT- SATZSPIEGEL- PAPIER
HERMANN AKZT GMBH, MÜNCHEN, TEL. (089) 4430431

FIG.1

FIG. 2

FIG. 4

FIG. 3

Europäisches
Patentamt

# EUROPÄISCHER RECHERCHENBERICHT

| | EINSCHLÄGIGE DOKUMENTE | | KLASSIFIKATION DER ANMELDUNG (Int. Cl.³) |
|---|---|---|---|
| Kategorie | Kennzeichnung des Dokuments mit Angabe, soweit erforderlich, der maßgeblichen Teile | betrifft Anspruch | F 24 J 3/02 |
| | FR - A - 2 410 793 (FUERXER) | | |
| | * insgesamt * | 1 | |
| | FR - A - 971 029 (VINACCIA) | | |
| | * insgesamt * | 1 | |
| P | US - A - 4 243 023 (ROM) | | |
| | * insgesamt * | 1-4 | |
| P/X | GB - A - 2 062 838 (ELEKTRIZI- TATSWERK) | | RECHERCHIERTE SACHGEBIETE (Int. Cl.³) |
| | * insgesamt * & BE - A - 886 024 & FR - A - 2 469 677 & DE - A - 2 945 052 | 1,2, 4,5 | F 24 J |
| P | FR - A - 2 459 947 (GALLAND) | | |
| | * insgesamt * | 1 | |
| A | FR - A - 2 405 447 (SIMONSSON) | | |
| A | DE - A - 2 540 463 (KIRN) | | |

KATEGORIE DER GENANNTEN DOKUMENTE

X: von besonderer Bedeutung allein betrachtet
Y: von besonderer Bedeutung in Verbindung mit einer anderen Veröffentlichung derselben Kategorie
A: technologischer Hintergrund
O: nichtschriftliche Offenbarung
P: Zwischenliteratur
T: der Erfindung zugrunde lie- gende Theorien oder Grund- satze
E: älteres Patentdokument, das jedoch erst am oder nach dem Anmeldedatum veröffentlicht worden ist
D: in der Anmeldung angeführtes Dokument
L: aus andern Gründen ange- führtes Dokument

&: Mitglied der gleichen Patent- familie, übereinstimmendes Dokument

Der vorliegende Recherchenbericht wurde für alle Patentansprüche erstellt.

| Recherchenort Den Haag | Abschlußdatum der Recherche 12.01.1982 | Prüfer SMETS |
|---|---|---|

EPA form 1503.1   06.78